# EUROPEAN PATENT APPLICATION

(11) **EP 1 884 533 A2**
(43) Date of publication of application: **06.02.2008**
(21) Application number: 07015257.4
(22) Date of filing: 03.08.2007
(51) Int. Cl.: C08J 5/12, C09J 5/06, C09J 163/00

(54) **Bonding process**

(30) Priority: 04.08.2006 US 821467 P; 13.09.2006 US 825500 P; 25.07.2007 US 782806
(71) Applicant: Zephyros Inc., Romeo, MI 48065 (US)
(72) Inventor: Hable, Christopher, Romeo, MI 48065 (US); Harthcock, Matthew, Oakland Township, MI 48306 (US); Carlson, David, Rochester Hills, MI 48307 (US); Kosal, David, Richmond, MI 48062 (US); Madaus, Brandon, Richmond, MI 48062 (US)
(74) Representative: Bawden, Peter Charles

(57) **Abstract**

An adhesive (30) is provided for bonding to a first surface (32), a second surface (34) or both. The adhesive (30) typically includes at least one curing agent that cures through exposure to a condition such as heat, moisture or a combination thereof.

## Description

### CLAIM OF PRIORITY

This application claims the benefit of the filing dates of U.S. Provisional Application Nos. 60/821,467 filed August 4, 2006 and 60/825,500 filed September 13, 2006, along with U.S. Application Serial No. 11/782,806 filed July 25, 2007 all of which are hereby incorporated by reference for all purposes.

### TECHNICAL FIELD

The present invention generally relates to adhesive materials. More particularly, the present invention relates to an adhesive material that is suitable for cure according to one, two or more mechanisms.

### BACKGROUND OF THE INVENTION

There are many different known adhesive materials and these adhesive materials can be cured according to multiple different mechanisms. Industry, however, often required that new and innovative adhesive materials be created and formulated to accommodate ever changing processing conditions, changes in articles of manufacture, desired properties and characteristics for certain processes and articles, combinations thereof or the like.

Accordingly, the present invention provides an innovative adhesive material that exhibits one or more characteristics desired by industry. The present invention additionally or attemptively provides a process of using the adhesive material that can aid the efficiency, cost effectiveness, rate or other characteristic of manufacturing techniques or other techniques.

### SUMMARY OF THE INVENTION

Accordingly, there is provided a process of adhesion. According to the process a first surface and a second surface are provided. An adhesive material is also provided. The adhesive material typically includes an epoxy material, a curing agent or both. The adhesive material is typically maintained at a first temperature prior to use. The adhesive material is then contacted with the first surface, the second surface or both. During or after such contacting, the adhesive material is typically exposed to a second temperature within a temperature range for activating the adhesive material to cure and achieve a desired level of adhesion to the first surface and the second surface. Preferably, the second temperature is greater than the first temperature.

### BRIEF DESCRIPTION OF THE DRAWING

The features and inventive aspects of the present invention will become more apparent upon reading the following detailed description, claims, and drawings, of which the following is a brief description:
Fig. 1 illustrates a sectional view of an exemplary adhesive material adhered to surfaces of members according to an aspect of the present invention;
Fig. 2 illustrates an exemplary assembly process in accordance with an aspect of the present invention;
Fig. 3 illustrates an exemplary adhesive material treated in accordance with an aspect of the present invention;
Fig. 4 illustrates exemplary formation and maintenance of an adhesive material in accordance with the present invention.
Fig. 5 illustrates exemplary curing techniques according to aspects of the present invention
Figs. 5A and 5B also illustrate exemplary curing techniques according to an aspect of the present invention.
Figs. 6A and 6B illustrate exemplary techniques of forming, curing and/or adhering adhesive material according to aspects of the present invention.
Fig. 7 illustrates another exemplary curing technique according to an aspect of the present invention.
Fig. 8 illustrates an exemplary adhesion and/or curing technique according to an aspect of the present invention.

### DETAILED DESCRIPTION

The present invention is predicated upon the provision of a novel adhesive material, a process of using the adhesive material or both. It is contemplated that the adhesive material can be adhered to one or more surfaces of nearly any article of manufacture and the surface[s] may be part of same or different members of the article. However, the adhesive material has been found particularly useful for adhesion to one or more surfaces of one or more members of an aerospace vehicle, an automotive vehicle, a building, furniture or the like.

The adhesive material includes without limitation, any combination of the following:
1) a base material that typically includes one or more polymeric materials such as epoxy resin;
2) a first curing agent that is activated to cure by a first mechanism wherein such first mechanism can include, for example, exposure to moisture, elevated temperature, radiation or both;
3) a second curing agent that is activated to cure by a second mechanism wherein such second mechanism can include, for example, exposure to elevated temperature;
4) blowing agent, which is preferably activated or otherwise activated to produce bubbles and/or foam the base material; and/or
5) filler, adhesion promoter, impact modifier, flexibilizer, flame retardant, surfactant, any combination thereof or the like.

The process of using the adhesive material typically includes one or any combination of the following steps:
1) provision of one, two or more surfaces that are typically of one, two or more members of an article of manufacture such an automotive vehicle, an aerospace vehicle (e.g., an airplane) or the like
2) contacting of the surface[s] with the adhesive material:
3) activation of a first curing agent by a first mechanism to achieve a first degree of cure and/or adhesion to the surface[s] wherein the first mechanism includes, for example, exposure of the first curing agent to moisture;
4) activation of a second curing agent by a second mechanism to achieve a second degree of adhesion to the surface[s] wherein the second mechanism includes, for example, exposure to elevated temperatures.

### Base Material

The base material is typically a curable and/or thermosettable material and is most often composed at least partially or substantially entirely of polymeric material. As used herein, the term polymeric material includes any material that is polymeric or becomes polymeric (i.e., polymerizes) upon curing of the adhesive material. The polymeric material can include only one type of polymer or can be an admixtue of 2, 3, 4 or several different polymers. The polymeric material admixture can include a variety of different polymers (e.g., copolymers), such as thermoplastics, elastomers, plastomers combinations thereof or the like. For example, and without limitation, polymers that might be appropriately incorporated into the polymeric admixture include halogenated polymers, polycarbonates, polyolefins (e.g., polyethylene, polypropylene), polyethylenes, polypropylenes, poly(ethylene oxides), polysiloxane, polyethers, polyphosphazines, poly(ethyleneimines), polyamides, polyketones, polyurethanes, polyesters, polyimides, polyisobutylenes, polyacrylonitriles, poly(vinyl chlorides), poly(methyl methacrylates), poly(vinyl acetates), poly(vinylidene chlorides), polytetrafluoroethylenes, polyisoprenes, polyacrylamides, silanes, sulfones, allyls, olefins, styrenes, acrylates, methacrylates, epoxies, silicones, phenolics, rubbers, polyphenylene oxides, terphthalates, acetates (e.g., EVA), acrylates, methacrylates (e.g., ethylene methyl acrylate polymer) and any combination or mixtures thereof.

The polymeric admixture typically comprises a substantial portion of the adhesive material (e.g., up to 85% by weight or greater). Preferably, the polymeric admixture comprises about 25% to about 85%, more preferably about 40% to about 75% and even more preferably about 50% to about 70% by weight of the adhesive material.

The polymeric admixture or base material typically can be at least partially or substantially entirely based upon epoxy chemistry and can include one or more epoxy materials. Epoxy resin or material is used herein to mean any of the conventional monomeric, dimeric, oligomeric or polymeric epoxy materials containing at least one epoxy functional group or combinations thereof. The polymer-based materials may be epoxy containing materials having one or more oxirane rings polymerizable by a ring opening reaction. In preferred embodiments, the structural adhesive material includes up to about 80 % epoxy resin. More preferably, the adhesive includes between about 10 % and 70% by weight epoxy resin and still more preferably between about 30 % and 50 % by weight epoxy resin.

The epoxy may be aliphatic, cycloaliphatic, aromatic or the like. The epoxy may be supplied as a solid (e.g., as pellets, chunks, pieces or the like), a liquid (e.g., an epoxy resin that is liquid at 23°C or a combination thereof). The epoxy may include an ethylene copolymer or terpolymer that may possess an alpha-olefin. As a copolymer or terpolymer, the polymer is composed of two or three different monomers, i.e., small molecules with high chemical reactivity that are capable of linking up with similar molecules. Preferably, an epoxy resin is added to the adhesive material to increase adhesion properties of the material. One exemplary epoxy resin may be a phenolic resin, which may be a novalac type or other type resin. Other preferred epoxy containing materials may include a bisphenol-A epichlorohydrin ether polymer, or a bisphenol-A epoxy resin which may be modified.

In some embodiments, one or more of the epoxy resins employed in the adhesive material are multifunctional and/or have relatively high functionalities (e.g., epoxy functionalities). When such relatively high functionality resins are employed, it is typically desirable for at least 5%, more typically at least 10% and even more typically at least 15% or even at least 20% of the epoxy resins have a functionality that is greater than about 2 (e.g., about 2.6 or greater) and possibly greater than about 3 (e.g., about 3.6 or greater) Advantageously, such higher functionality can, in certain instances, provide for improved high temperature performance (e.g., higher Tg prior to, during or after first or second cure), improved lap shear strength or a combination thereof.

In one preferred embodiment, at least 70%, 90%. 95% or more of the polymeric material is comprised of a bisphenol A epoxy resin, a bisphenol F epoxy resin, glycidyl ethers thereof, or any combination thereof.

### First or Second Curing Agent

One or more curing agents and/or curing agent accelerators may be added to the adhesive material. Thus, it is contemplated that a single curing agent may be employed or two or more curing agents may be employed. When two or more curing agents are employed, it is contemplated that the two or more agents can be from the same class or different class of curing agents and may be directed at curing same or different polymeric materials.

Amounts of curing agents and curing agent accelerators can vary widely within the adhesive material depending upon the type of cellular structure desired, the desired amount or rate of expansion of the adhesive material if the adhesive material is expandable, the desired structural properties of the adhesive material or the like. Exemplary ranges for effective amounts of the curing agents, curing agent accelerators or both together present in the adhesive material range from about 0.1 % by weight to about 7 % by weight.

Preferably, the curing agents assist the adhesive material in curing by crosslinking of the polymers, epoxy resins or both. It is also preferable for the curing agents to assist in thermosetting the adhesive material. Useful classes of curing agents are materials selected from aliphatic or aromatic amines or their respective adducts, amidoamines, polyamides, imidazoles, cycloaliphatic amines, anhydrides, polycarboxylic polyesters, isocyanates, phenol-based resins (such as phenol or cresol novolak resins, copolymers such as those of phenol terpene, polyvinyl phenol, or bisphenol-A formaldehyde copolymers, bishydroxyphenyl alkanes or the like), peroxides or mixtures thereof. Particularly preferred curing agents include modified and unmodified polyamines or polyamides such as ethylene diamine, triethylenetetramine, diethylenetriamine tetraethylenepentamine, cyanoguanidine, dicyandiamides and the like. An accelerator for the curing agents (e.g., a modified or unmodified urea such as methylene diphenyl bis urea, tertiary amines, an imidazole or a combination thereof) may also be provided for preparing the adhesive material. It is contemplated that certain of these curing agents can be employed at non-stoichiometric or sub-stoichiometric levels to achieve a first or lesser degree of curing and/or adhesion when desired. For example, such can be employed to achieve the first cure discussed further below.

Though longer curing times are also possible, curing times of less than 5 minutes, and even less than 30 seconds are possible for the formulation of the present invention. Moreover, such curing times can depend upon whether additional energy (e.g., heat, light, radiation) is applied to the material or whether the material is cured at room temperature and what degree of curing is desired for any given stage of processing for an article of manufacture.

### Blowing Agent

One or more blowing agents may be added to the adhesive material for producing inert gasses that form, as desired, an open and/or closed cellular structure within the adhesive material. In this manner, it may be possible to lower the density of articles fabricated from the material. In addition, the material expansion can help to improve sealing capability, acoustic damping or both.

The blowing agent[s] may include one or more nitrogen containing groups such as amides, amines and the like. Examples of suitable blowing agents include azodicarbonamide, dinitrosopentamethylenetetramine, 4,4ᵢ-oxy-bis-(benzenesulphonylhydrazide), trihydrazinotriazine and N, Nᵢ-dimethyl-N,Nᵢ-dinitrosoterephthalamide. Physical blowing agents such as solvents encapsulated in a thermoplastic shell may also be used. Such agents are sold under the tradename EXPANCEL and are commercially available from Akzo Nobel.

Another blowing agent that may be employed to produce bubbles and/or foaming of the moisture cure adhesive material described below is a blowing agent that reacts with an amine to produce such foaming and/or bubbles. An example of such an agent is a siloxane such as a polymethylhydrogen siloxane. Such an agent is sold under the tradename MH 1107 fluid and is commercially available from Dow-Corning. The agent preferably provides such foaming during the moisture cure of the adhesive material.

An accelerator for the blowing agent[s] may also be provided in the adhesive material. Various accelerators may be used to lower the temperature of blowing agent activation and/or increase the rate at which the blowing agents form inert gasses. One preferred blowing agent accelerator is a metal salt, or is an oxide, e.g. a metal oxide, such as zinc oxide. Other preferred accelerators include organic bases such as urea and organic acids such as adipic or benzoic acid. Zinc benzene sulfinate may also be a desirable accelerator.

Amounts of blowing agents and blowing agent accelerators can vary widely within the adhesive material depending upon the type of cellular structure desired, the desired amount of expansion of the adhesive material, the desired rate of expansion and the like. Exemplary ranges for the amounts of blowing agent and blowing agent accelerator in the adhesive material range from about 0.001 % by weight to about 5 % by weight and are preferably in the adhesive material in fractions of weight percentages.

In one embodiment, the present invention contemplates the omission of a blowing agent. Preferably, however, the material, the blowing agent or both of the present invention are thermally activated. Alternatively, other agents may be employed for realizing activation by other means, such as moisture, radiation, or otherwise.

### Elastomer or Adduct

The adhesive material can include elastomer that is mixed into the adhesive in a non-reacted state or elastomer that is reacted with another material (e.g., as an adduct) or a combination of both. Examples of suitable elastomers include, without limitation natural rubber, styrene-butadiene rubber, polyisoprene, polyisobutylene, polybutadiene, isoprene-butadiene copolymer, neoprene, butadiene nitrile rubber (e.g., carboxyl-terminated butadiene nitrile), butyl rubber, polysulfide elastomer, acrylic elastomer, acrylonitrile elastomers, silicone rubber, polysiloxanes, polyester rubber, diisocyanate-linked condensation elastomer, EPDM (ethylene-propylene diene rubbers), chlorosulphonated polyethylene, fluorinated hydrocarbons and the like. In one embodiment, recycled tire rubber is employed.

In a highly preferred embodiment, an elastomer-containing adduct is employed in the adhesive material of the present invention, and preferably in a relatively high concentration (e.g., on the order of the epoxy resin). The adduct may be included in an amount of up to about 80 % by weight of the adhesive material. More preferably, the elastomer-containing adduct is approximately 20 to 60%, and more preferably is about 35 % to 55% by weight of the adhesive material. Of course, the elastomer-containing adduct may be a combination of two or more particular adducts and the adducts may be solid adducts or liquid adducts at a temperature of 23 °C or may also be combinations thereof.

Preferred epoxy/elastomer adducts generally include about 1:5 to 5:1 parts of epoxy to elastomer, and more preferably about 1:3 to 3:1 parts or epoxy to elastomer. More typically, the adduct includes at least about 5%, more typically at least about 12% and even more typically at least about 18% elastomer and also typically includes not greater than about 50%, even more typically no greater than about 40% and still more typically no greater than about 30% elastomer, although higher or lower percentages are possible. The elastomer compound may be any suitable art disclosed elastomer such as a thermosetting elastomer Examples of additional or alternative epoxy/elastomer or other adducts suitable for use in the present invention are disclosed in U.S. Patent Publication 2004/0204551, which is incorporated herein by reference for all purposes.

The elastomer-containing adduct, when added to the adhesive material, preferably is added to modify structural properties of the adhesive material such as strength, toughness, stiffness, flexural modulus, or the like.

### Filler

The adhesive material may also include one or more fillers, including but not limited to particulated materials (e.g., powder), beads, microspheres, nanoparticles or the like Preferably the filler includes a relatively low-density material that is generally non-reactive with the other components present in the adhesive material.

Examples of fillers include silica, diatomaceous earth, glass, clay, talc, pigments, colorants, glass beads or bubbles, glass, carbon ceramic fibers, antioxidants, and the like. Such fillers, particularly clays, can assist the adhesive material in leveling itself during flow of the material. The clays that may be used as fillers may include nanoparticles of clay and/or clays from the kaolinite, illite, chloritem, smecitite or sepiolite groups, which may be calcined. Examples of suitable fillers include, without limitation, talc, vermiculite, pyrophyllite, sauconite, saponite, nontronite, montmorillonite, wollastonite or mixtures thereof. The clays may also include minor amounts of other ingredients such as carbonates, feldspars, micas and quartz. Titanium dioxide might also be employed. In one or more embodiments of the present invention, it can be desirable for a substantial portion (e.g., 40%, 70% or more) of the fillers (e.g., the mineral fillers such as wollastonite or the others) to have a relatively high aspect ratio of greater than or equal to 2 to 1, although possibly lower, more typically greater than or equal to 3 or 4 to 1, and possibly greater than or equal to 8 to 1, 12 to 1, 20 to 1 or more.

In one preferred embodiment, one or more mineral or stone type fillers such as calcium carbonate, sodium carbonate or the like may be used as fillers. In another preferred embodiment, silicate minerals such as mica may be used as fillers.

When employed, the fillers in the adhesive material can range from 1 % to 90 % by weight of the adhesive material. According to some embodiments, the adhesive material may include from about 3 % to about 30 % by weight, and more preferably about 10 % to about 20 % by weight clays or similar fillers.

It is contemplated that one of the fillers or other components of the material may be thixotropic for assisting in controlling flow of the material as well as properties such as tensile, compressive or shear strength.

### Other Additives

Other additives, agents or performance modifiers may also be included in the adhesive material as desired, including but not limited to a UV resistant agent, a flame retardant, an impact modifier, core/shell polymer, particulate rubber, a heat stabilizer, a UV photoinitiator, a colorant, a processing aid, an anti-oxidant, a lubricant, a coagent, a reinforcement (e.g., chopped or continuous glass, glass fiber, ceramics and ceramic fibers, aramid fibers, aramid pulp, carbon fiber, acrylate fiber, polyamide fiber, polypropylene fibers, combinations thereof or the like). In one preferred embodiment, for example, an acrylate coagent may be employed for enhancing cure density. It is also contemplated that the adhesive material may include about 0.10 to about 5.00 weight percent of an anti-oxidant such as a propionate (e.g., pentaerythritol tetrakis (3-(3,5-di-tert-butyl-4-hydroxyphenyl) propionate)) for assisting in controlling oxidation, cure rate or both. An example of such an anti-oxidant is sold under the tradename IRGANOX^{®} 1010 and is commercially available from Ciba Specialty Chemicals Company, 141 Klybeckstrasse, Postfach, 4002 Basel, Switzerland.

### Formation

Formation of the adhesive material can be accomplished according to a variety of new or known techniques. Preferably, the adhesive material is formed as a material of substantially homogeneous composition. However, it is contemplated that various combining techniques may be used to increase or decrease the concentration of certain components in certain locations of the adhesive material.

According to one embodiment, the adhesive material is formed by supplying the components of the material in solid form such as pellets, chunks and the like, in liquid form or a combination thereof. The components are typically combined in one or more containers such as large bins or other containers. Preferably, the containers can be used to intermix the components by rotating or otherwise moving the container. Thereafter, heat, pressure or a combination thereof may be applied to soften or liquefy the components such that the components can be intermixed by stirring or otherwise into a single homogenous composition.

According to another embodiment, the adhesive material may be formed by heating one or more of the components that is generally easier to soften or liquefy such as the polymer based materials to induce those components into a mixable state. Thereafter, the remaining components may then be intermixed with the softened components.

Depending upon the components used, it may be important to assure that the temperature of the components remains below certain activation temperatures that might cause the adhesive material to activate (e.g., form gasses, expand, flow, cure, thermoset or otherwise activate). Notably, when the adhesive material contains a blowing agent or certain curing agents, it is typically desirable to maintain the temperature of the adhesive material below a temperature that will activate the blowing agent or curing agent during formation of the adhesive material or before the adhesive material is applied to a surface. In situations where it is desirable to maintain the adhesive material at lower temperatures it may be desirable to maintain the components in a semi-solid or viscoelastic state using pressure or a combination of pressure and heat to intermix the components of the adhesive material. Various machines have been designed to applying heat, pressure or both to materials.

The adhesive material can be formed into a liquid, semi-solid, sold or combination thereof As such, the adhesive may be formed into a sprayable liquid, a paste, solid or semi-solid masses or the like and can be supplied as a paste, tape, film or the like.

### Application

The adhesive material is typically contacted with one or more surfaces and adhered to the one or more surfaces. The adhesive material of the present invention is typically adhered to the one or more surfaces with a first degree or level of adhesion and then adhered to the one or more surfaces with a second degree or level of adhesion. However, it could be adhered to the surfaces with only the first degreed or level of adhesion.

In a preferred embodiment, the adhesive material and/or the first curing agent is activated to cure by a first mechanism. As suggested previously, the first curing agent may be the only curing agent and, thus, a curing of the first curing agent may be the only curing of the adhesive material. That single curing agent could be cured in a single stage (e.g., during one continuous period of time) to cure and adhere the adhesive material to the one or more surfaces in that single stage. However, it is generally preferred for the present invention that the adhesive material is configured to adhere and/or cure in two or more stages (i.e., at two or more distinct and substantially continuous periods of time) and will typically include two different curing agents or different curing or adhesion mechanisms.

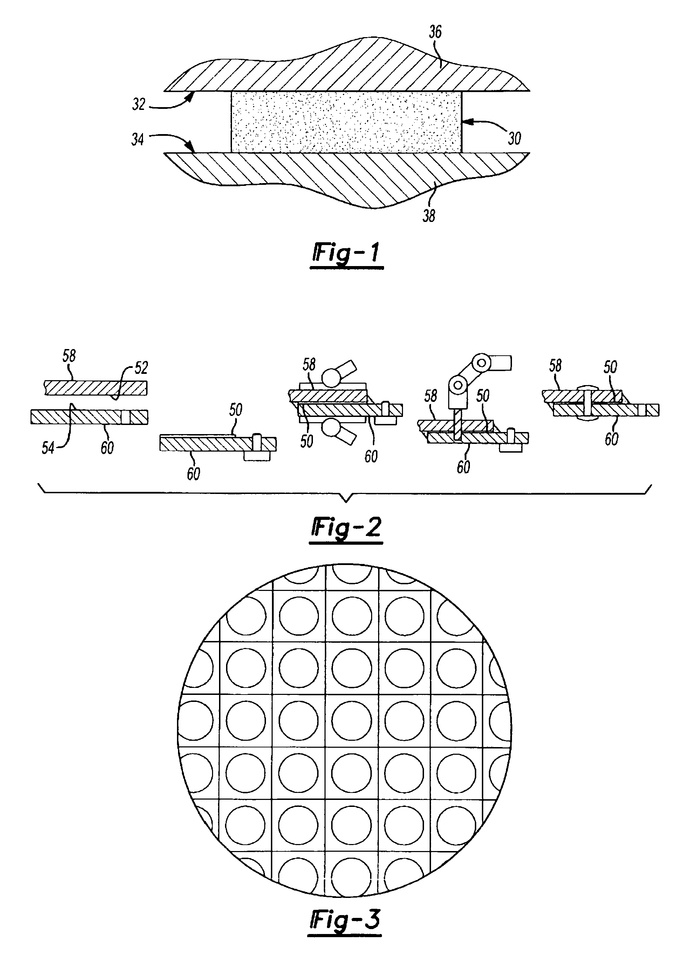

With reference to Fig. 1, the adhesive material 30 is contacted with at least one, two, three or more surfaces, but as shown a first surface 32 and a second surface 34. The surfaces may be provided by one, two, three or more members, but shown as a first member 36 and a second member 38 of an article of manufacture. Thereafter, the adhesive material 30 is at least partially or substantially fully cured by the first curing agent to increase adhesion of the adhesive material 30 to the surface[s]. 32, 34 and/or to enhance a strength (e.g., tensile or lap shear strength) of connection between the surface[s] 32, 34, the member[s] 36, 38 or both.

It will be understood that the adhesive material may be formulated to have a degree of natural tack to assist in adhesion to the surfaces or may be substantially tack free prior to exposure to moisture or other cure mechanism. It is also contemplated that one of the blowing agents may be employed to expand the adhesive material, foam the adhesive material, assist the adhesive material in whetting the surfaces or any combination thereof during the curing by the first curing agent.

As discussed earlier, there may be curing by the first curing agent without curing by any second curing agent. However, according to one preferred embodiment the adhesive material goes through a second activation stage that involves at least curing of the base material by the second curing agent.

The second curing agent like the first may be activated by various different mechanisms, some of which have been discussed herein. In one preferred embodiment, the adhesive material is activated to expand, foam, cure (e.g. cross-link, thermoset), whet, adhere or any combination thereof through exposure to elevated temperatures. Exemplary elevated temperatures for the second cure are desirably between about 80°C and about 200°C and more typically between about 100°C and about 140°C, although higher and lower temperature may be employed unless otherwise stated. Such temperature can be experienced, for example, in an autoclave or an oven or can be brought about, for example, by heating blankets, IR lamps, induction heating.

Advantageously, for the two stage cure adhesive materials, the first cure can provide a strength of connection, by itself or in conjunction with other connections (e.g., mechanical fasteners), to a surface or between two or more surfaces sufficient to allow the member[s] that provide the surface to be further processed (e.g., transported, moved, further assembled). Then the second cure can provide a connection, by itself or in conjunction with other connections (e.g., mechanical fasteners), of sufficient strength for use of the article of manufacture. For example, for members of an aerospace vehicle or automotive vehicle, the first cure will provide a sufficiently strong connection for the members to go through further assembly or other processing without becoming disconnected. Then the second cure will provide connection sufficient to endure forces that might be experienced in flight or during driving of the vehicle. Again, each of these adhesive connections may be sufficient by themselves or in conjunction with other connections (e.g., mechanical fasteners).

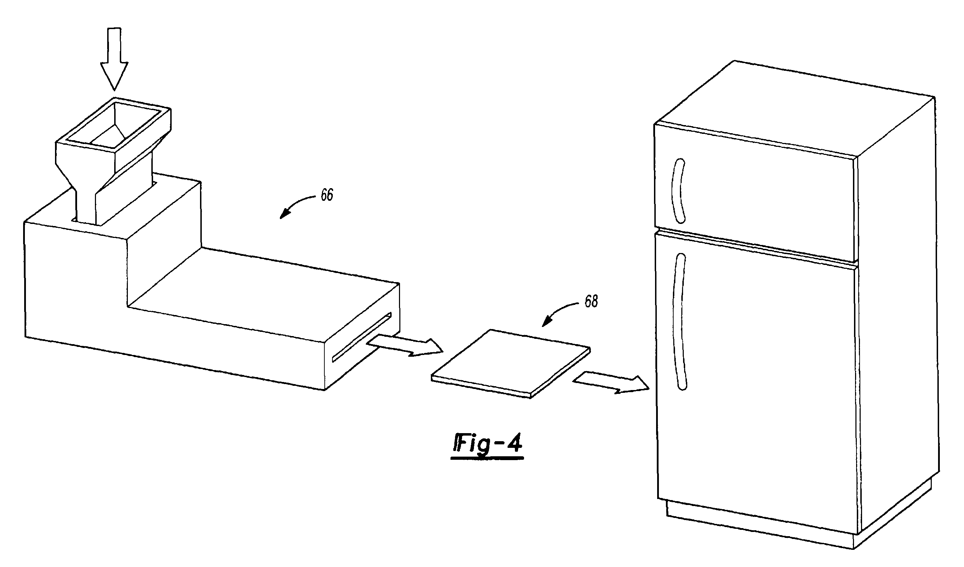

One preferred embodiment of a process using the adhesive material 50 of the present invention is illustrated in Fig. 2. As shown, adhesive material is located between and contacted with a first surface 52 and a second surface 54. In the embodiment shown, the first surface 52 is part of a first member 58 (e.g., panel) and the second surface 54 is part of a second member 60 (e.g., panel). In one embodiment, the first and second members are part of an aerospace vehicle. Suitable potential parts or members can include, without limitation, skins, ribs, spars, brackets, any combinations thereof or the like. Preferred parts are "box type components" or tunnel forming components that are preferably part of aerospace control surfaces or structures such as elevators, rudders, wing movables (e.g., inner and outer flaps and/or aileron), stabilizers (e.g., horizontal stabilizers), fins (e.g., vertical fins).

During or after contact with the surfaces 52, 54, the adhesive undergoes a first stage cure. Thereafter, the members 58, 60 may be further processed. For example, as shown openings (e.g., through-holes) can be formed (e.g., drilled) in and/or through the first member, the second member, the adhesive or any combination thereof. In turn, a fastener such as a rivet may be located within the opening for assisting in attaching the first member to the second member. Moreover, before, during or after the further processing, the adhesive material 50 of adhesive can undergo a second cure. For example, the adhesive material can be exposed to elevated temperature of between about 80°C and about 200°C and more typically between about 100°C and about 140°C for second cure.

It is contemplated that after the first cure, the adhesive material will exhibit lap shear strength of at least about 0.7 MPa, although possibly lower, more typically at least about 1.6 MPa and even more possibly at least about 2.4 MPa. It is also contemplated after first cure, the adhesive material will exhibit lap shear strength below about 100 MPa, although possibly higher, more typically below about 10 MPa or 7 MPa and even possibly below 4.5 MPa. It is contemplated that after the second cure, the adhesive material will exhibit lap shear strength of at least about 10 MPa, although possibly lower, at least about 15 Mpa, more typically at least about 20 MPa and even more possibly at least about 25 MPa. For a single stage cure, strengths are typically more in line with those recited after secondary cure. Lap shear strengths for the present invention can be calculated according to ASTM D1002-01 titled "Apparent Shear Strength of Single-Lap-Joint Adhesively Noded Metal Specimens by Tesion Loading (Metal-to-Metal) or ASTM D3528-96 titled "Standard Test Method for Strength Properties of Double Lap Shear Adhesive Joints by Tension Loading".

### Moisture Cure

The first mechanism for activation of the first curing agent may be any of those mechanisms discussed herein or otherwise. In a preferred embodiment, however, the first curing agent is activated to cure (e.g., cross-link) the base material by exposure of the adhesive material and particularly the first curing agent to moisture.

Exposure to moisture, as used herein, is typically meant to refer to any form of exposure to water, although exposure to other liquids is possible as well. Thus, without limitation, exposure to humidity, steam, liquid water, any material including water, combinations thereof or the like can be include within exposure to water, unless otherwise specifically stated.

The first curing agent can be exposed to moisture by locating (e.g., dabbing, spraying, brushing, swabbing) a layer of moisture on one or more surfaces of the adhesive material. The adhesive material may be exposed to moisture by submersion of the adhesive material into liquid including water or exposure to a high humidity environment or a condensing humidity environment such a fog or steam. If the adhesive is supplied in a liquid state, as a paste, in a flowable state, in a mixable state, in a semi-solid state or any combination thereof, water can be intermixed into the adhesive material.

For enhancing the exposure of the adhesive material, the first curing agent or both to moisture, multiple techniques can be employed in addition or as an alternative to the aforementioned techniques. As one example, an external moisture material may be layered upon and/or integrated with the surface of the adhesive material whatever form (e.g., film or paste) that the adhesive material takes so long as that moisture material has a tendency to increase the exposure to moisture experienced by the surface[s] of the adhesive material.

The moisture material could be provided as a fibrous material (e.g. a fabric), a fabric, an agglomeration or otherwise. In one preferred configuration, the moisture material provides multiple opening that allow moisture, however applied, to accumulate in the openings and thus maintain a greater amount and/or duration of exposure to moisture by surface[s] of the adhesive material. An example of a preferred moisture material is a fabric of scrim material that is formed of multiple polymeric or other fibers that are woven or otherwise agglomerated together for forming openings to receive moisture.

It is contemplated that moisture material may be applied to one surface or multiple surfaces (e.g., two, three or more surfaces) of adhesive material. In one embodiment, the moisture material is applied to one surface of the adhesive material while another surface of the adhesive material is without any moisture material. Advantageously, the moisture material can provide for relatively non-tacky handling surface while the other side can with or without exposure to moisture, can be contacted with and/or adhered to a surface of a member. Thereafter, the surface with the moisture material can be contacted with and/or adhered to another surface of the same of a different member, preferably with, but also possibly without prior exposure to moisture.

As an addition or alternative, multiple openings (e.g., cavities) and/or contours (e.g., protrusions) may be formed upon one or more surfaces of the adhesive material for increasing exposure of the surtace[s] to moisture in duration, amount or both. In one embodiment shown in Fig. 3, openings of the moisture material are aligned with openings of the adhesive material to create pockets for retention of moisture.

Advantageously, increasing the amount and/or duration of surface exposure to moisture can increase the cure at the surface[s] of the adhesive material as well as within the adhesive material depending on how quickly and effectively the moisture diffuses from the surface[s] into the adhesive material. It can also be desirable to use one or more techniques to increase diffusion of the moisture into the adhesive material. Thus, it can be desirable to incorporate an internal moisture material into the adhesive material. While any of the moisture material already discussed herein can be incorporated internally within the adhesive material, additional or alternative moisture materials that can be incorporated internally within the adhesive material are discussed below. While these materials are discussed in the context of being internal within the adhesive material, it is contemplated that such material can also be used on surface (e.g., in layers) as surface moisture materials.

Internal moisture materials could be any hydrophyllic material suitable for mixing into the adhesive material, unless otherwise specified. Internal moisture materials can be provided as pieces in a variety of configurations such as chunks, pellets, pulp, fibers combinations thereof or the like. Fibers or fibrous materials have been found to be particularly effective. Materials for the internal moisture materials can include polymeric materials, cellulose, aramid, nylon, kevlar, silica any combination thereof or the like. Advantageously, the internal moisture materials can increase rates of diffusion of moisture into the adhesive material particularly relative to the natural rates of diffusion for the adhesive material without the moisture materials. It is even further contemplated that the adhesive material can be heated to an elevated temperature to assist in moving water into the adhesive material. Such an elevated temperature is typically at least about 30 °C, more typically at least about 40 °C and is typically less than about 120 °C, more typically less than about 100 °C, although higher or lower temperatures are possible.

It will be understood that the adhesive material can be exposed to moisture before, after or during contacting of the adhesive material with the surfaces. It will also be understood that the adhesive material may be formulated to have a degree of natural tack to assist in adhesion to the surfaces or may be substantially tack free prior to exposure to moisture or other cure mechanism. It is also contemplated that one of the blowing agents may be employed to expand the adhesive material, foam the adhesive material, assist the adhesive material in whetting the surfaces or any combination thereof during the curing by the first curing agent.

The first curing agent is typically chosen such that it cures the base material according to a predetermined desired mechanism. Preferred material that can be included as part of the first curing agent is an amine amide, ketamine, combination thereof or the like.

The amine, when used, can be a primary amine, a secondary amine or a combination thereof. The amine can be a diamine, a tertiary amine or otherwise. The amine can also include one or more hydrocarbon moieties such as, without limitation, a methyl group, an ethyl group, a butyl group any combination thereof or the like. One particularly preferred amine is an ethylene diamine.

The first curing agent can also include a substrate or binder. The substrate is typically a polymeric material (e.g., a copolymer), although not required. The substrate can be an acetate, an acrylate or otherwise. Moreover, the substrate can include one or more moieties including, without limitation, a methyl group, an ethyl group, a butyl group, any combination thereof or the like. One particularly preferred substrate is a porous material such as molecular sieve and/or carrier material partially or substantially fully coated by or impregnated in the first curing agent (e.g., the amine). Such a material can be provided as a microporous powder or a pellets. An example of such a material is a molecular sieve material substantially impregnated by an ethylene diamine and additionally including an ethylene butyl acrylate copolymer binder. Such a curing agent is supplied as pellets or powder and is sold under the tradename LOTADER XX1333C and is commercially available from Arkema Corporation. In such curing agents, the moisture can act to displace the amine or other curing agent from the substrate, sieve or carrier such that it can cure (e.g., cross-link) the polymeric materials.

Once the adhesive material has been adhered to the surface[s] of member[s] or component[s] of an article of manufacture and/or the adhesive material has undergone it first cure, the adhesive material can then undergo a second cure as described above to enhance the connection of the adhesive material to the surface. The second cure will typically involve the activation of the adhesive material to expand, foam, cure (e.g. cross-link, thermoset), whet, adhere or any combination thereof. The second curing agent like the first may be activated by various different mechanisms, some of which have been discussed herein. In one preferred embodiment, the adhesive material is activated by elevated temperature or heat.

It can be desirable for the moisture cure adhesive material, prior to application thereof, to store the material in a low-moisture environment. Thus, the adhesive material may be stored as pre-formed masses in sealed containers (e.g., bags), which may also contain a dessicant, inert gas or a combination thereof.

Exemplary formulations of adhesive material for moisture/elevated temperature cure is listed in table I below with amount given in weight percent:

| **INGREDIENT** | **Wt %** | **Wt %** | **Wt %** | **Wt%** | **Wt%** |
|---|---|---|---|---|---|
| Liquid Epoxy Resin | 32.97 | 26.19 | 28.09 | 32.96 | 38.02 |
| Solid Epoxy Resin | | 11.90 | 7.87 | | |
| Solid Epoxy/Solid Elastomer (e.g., CTBN) adduct | 32.97 | 38.10 | 35.95 | 32.97 | 38.02 |
| Molecular Sieve Curing Agent | 32.97 | 17.55 | 16.57 | 32.97 | 17.52 |
| Polymethylhydrogen Siloxane fluid | | | | 0.55 | 0.20 |
| Nanoclay | 1.10 | 1.07 | 1.01 | 0.55 | 1.07 |
| Pulverized Dicyandiamide | | 3.28 | 3.09 | | 3.27 |
| Modified Urea Accelerator (e.g., 4, 4' Methylene bis (phenyl dimethyl urea) | | 0.95 | 0.90 | | 0.95 |
| Latent Amine Curing Agent Accelerator | | 0.95 | 0.90 | | 0.95 |
| Cellulosic fiber | | | 5.62 | | |

Above, exemplary formulations of the adhesive material are provided. Since they are merely exemplary, it is contemplated that the weight percents of the various ingredients may vary by ± 50% or more or by ± 30% or ± 10%. For example, a value of 50 ± 10% is a range of 45 to 55. Moreover, ingredients may be added or removed from the formulations.

### Two Temperature Cure

In one embodiment, the adhesive material is formulated to include a first curing agent that substantially cures within a first temperature range and a second curing agent that cures within a second temperature range. The first temperature range can include temperatures at or around an ambient or room temperature while the second temperature range can include temperatures that are above ambient or room temperature. Alternatively, the temperatures of the first temperature range and the second temperature range can be above ambient or room temperature.

For the ambient/elevated temperature cure, the first temperature range typically includes temperatures that are at least about -10°C, more typically at least about 8°C and even more typically at least about 15°C but are typically less that about 100°C, more typically less that about 55°C and even more typically less that about 25°C (e.g., around 20°C). The second temperature range typically include temperatures that are at least about 80°C. more typically at least about 105°C, and even more typically at least about 115°C but are typically less that about 300°C, more typically less than about 180°C and even more typically less than about 140°C.

For elevated/elevated cure, the first temperature range typically includes temperatures that are at least about 10°C, more typically at least about 25°C and even more typically at least about 35°C but are typically less than about 100°C, more typically less that about 55°C and even more typically less that about 45° (e.g., around 40°C). The second temperature range typically include temperatures that are at least about 80°C, more typically at least about 105°C, and even more typically at least about 115°C but are typically less that about 300°C, more typically less than about 180°C and even more typically less than about 140°C.

Of course, it is contemplated that higher or lower ranges than those discussed above may be employed unless otherwise specified. It is also contemplated that the first or second curing agents can cure at higher temperatures than those specified, however, it can be particularly desirable for the curing agents to be substantially non-reactive at temperatures below the recited lower limits.

For use of the adhesive, the ingredients of the adhesive are mixed and then maintained substantially uncured. For the ambient/elevated temperature cure, the ingredient are typically mixed and then maintained at a temperature below ambient or room temperature. For example, in Fig. 4, the ingredients of the adhesive materials are mixed in a mixing device 66 shown as an extruder and formed (e.g., extruded) into masses 68 (e.g., strips or tapes) and are then stored at lower temperatures (e.g., below 15°C, 0°C or lower) until application. The adhesive masses 68 can be applied as discussed above and allowed to undergo a first cure and adhere to surfaces at temperature of activation (i.e., ambient or room temperature) for the first curing agent. The adhesive and the member[s] to which the adhesive is adhered can then undergo further processing as is discussed above. Then the adhesive can be exposed to temperature of activation for the second curing agent for second activation and/or cure.

For the elevated/elevated temperature cure, the ingredients are typically mixed and then maintained at a temperature below the activation temperature of the first curing agent (e.g., at ambient or room temperature). For example, again with reference to Fig. 4, the ingredients of the adhesive materials are mixed in a mixing device 66 shown as an extruder and formed (e.g., extruded) into masses 68 (e.g., strips or tapes). However, there may be no need to store the masses 68 at temperature below ambient or room temperatures. The adhesive masses 68 can be applied as discussed above and allowed to undergo a first cure and adhere to surfaces at temperature of activation (i.e., by exposing the adhesive material to elevated temperature in the first activation ranges) for the first curing agent. The adhesive and the member[s] to which the adhesive is adhered can then undergo further processing as is discussed above. Then the adhesive can be exposed to temperature of activation for the second curing agent for second activation and/or cure.

During mixing, it is contemplated that the temperatures can exceed the curing temperatures of the first curing agent and/or the second curing agent. However, if the adhesive material is quickly mixed and formed into masses and, preferably, quickly brought to temperatures below activation, the masses can be maintained substantially uncured prior to use.

### Ambient/Elevated Cure

One preferred formulation of adhesive material for two temperature cure (e.g., ambient/elevated cure) is listed in table II below:

| **INGREDIENT** | **WEIGHT %** |
|---|---|
| Semi-Solid Bisphenol A Epoxy Resin | 75.89 |
| Liquid Epoxy/Liquid CTBN adduct | 13.39 |
| Unmodified Cycloaliphatic Polyamine | 4.46 |
| Pulverized Dicyandiamide | 4.48 |
| Modified Urea Curing Agent Accelerator (4, 4' Methylene bis (phenyl dimethyl urea)) | 0.89 |
| Latent amine curing agent accelerator | 0.89 |

Above, exemplary formulations of the adhesive material are provided. Since they are merely exemplary, it is contemplated that the weight percents of the various ingredients may vary by ± 50% or more or by ± 30% or ± 10%. For example, a value of 50 ± 10% is a range of 45 to 55. Moreover, ingredients may be added or removed from the formulations.

### Elevated/Elevated Cure

One preferred formulation of adhesive material for two temperature cure (e.g., elevated/elevated cure) is listed in table III below

| **INGREDIENT** | **WEIGHT %** |
|---|---|
| Semi-Solid Epoxy Resin | 79.64 |
| Polyurethane Polyol | 8.85 |
| Dicyandiamide | 6.20 |
| Substituted Urea | 1.77 |
| Amine Adduct | 1.77 |
| Imidazole | 1.77 |

Above, exemplary formulations of the adhesive material are provided. Since they are merely exemplary, it is contemplated that the weight percents of the various ingredients may vary by ± 50% or more or by ± 30% or ± 10%. For example, a value of 50 ± 10% is a range of 45 to 55. Moreover, ingredients may be added or removed from the formulations.

### Single Cure

In one embodiment, the adhesive material is designed to be maintained uncured at a first temperature and then activated to expand, foam, cure, thermoset or any combination thereof at a second temperature that is typically higher that the first temperature. The adhesive material of this embodiment is typically formulated to include a curing agent that substantially entirely cures (e.g., at least 90%, 95%, 99% or greater cure) or entirely cures the adhesive material at the second temperature, which is within a predetermined temperature range. The first temperature is typically below about 40 °C, more typically below about 15 °C, even more typically below about 7 °C and still more typically below about 0 °C and even possibly below about -11 °C, although higher temperatures are possible. It is typically desirable for the curing agent and/or the adhesive material to be substantially non-reactive at temperatures below these recited temperatures. The temperature range typically includes temperatures that are at least about -10°C, more typically at least about 8°C and even more typically at least about 15°C but are typically less than about 100°C, more typically less than about 75°C or 50 °C and even more typically less than about 35 °C and even possibly less than about 25 °C (e.g., around 23 °C), although higher or lower temperatures are possible.

In one preferred embodiment, the adhesive material can be exposed to a higher temperature (e.g., about 40 °C) with the first temperature range to accelerate initial curing and/or flow of the adhesive material and then allowed to cool to another temperature (e.g., about 23 °C) while continuing to cure Advantageously, exposure to the higher temperature can assist a portion of the adhesive material in flowing and extending partially out from between two surfaces to which the adhesive material is adhered. Such advantage is discussed further below.

The ingredients for the single cure may be mixed and formed into masses strips in the same manner as that employed for the ambient/elevated temperature cure and then stored in the same manner as well. The adhesive masses can be applied as discussed above and allowed to undergo activation (e.g., cure, foaming or both) and adhere to surfaces at temperature of activation for the curing agent. The adhesive and the member[s] to which the adhesive is adhered can then undergo further processing as is discussed above.

During mixing, it is contemplated that the temperatures can exceed the curing temperatures of the curing agent However, if the adhesive material is quickly mixed and formed into masses and, preferably, quickly brought to temperatures below activation, the masses can be maintained substantially uncured prior to use.

One preferred formulation of adhesive material for the single cure adhesive material is listed in table IV below:

| **INGREDIENT** | **WEIGHT %** |
|---|---|
| solid epoxy/CTBN adduct | 29 |
| epoxy cresol novolac | 27 |
| polyoxypropyleneamine | 14.8 |
| wollastonite | 9 |
| hollow glass spheres | 19 |
| iron oxide | 1.2 |

Above, exemplary formulations of the adhesive material are provided. Since they are merely exemplary, it is contemplated that the weight percents of the various ingredients may vary by ± 50% or more or by ± 30% or ± 10%. For example, a value of 50 ± 10% is a range of 45 to 55. Moreover, ingredients may be added or removed from the formulations.

### Stimulus

In another additional or alternative embodiment, the first cure may be accomplished by exposure of the adhesive to a stimulus such as radiation, energy or electrical current that causes a curing reaction within the adhesive material. Generally, as used herein, radiation includes the transmission of energy through rays, waves, particles or the like. Radiation, when used, can be selected from, for example, electromagnetic radiation, heat radiation, infrared radiation, ultraviolet light, visible light, microwaves, combinations thereof or the like.

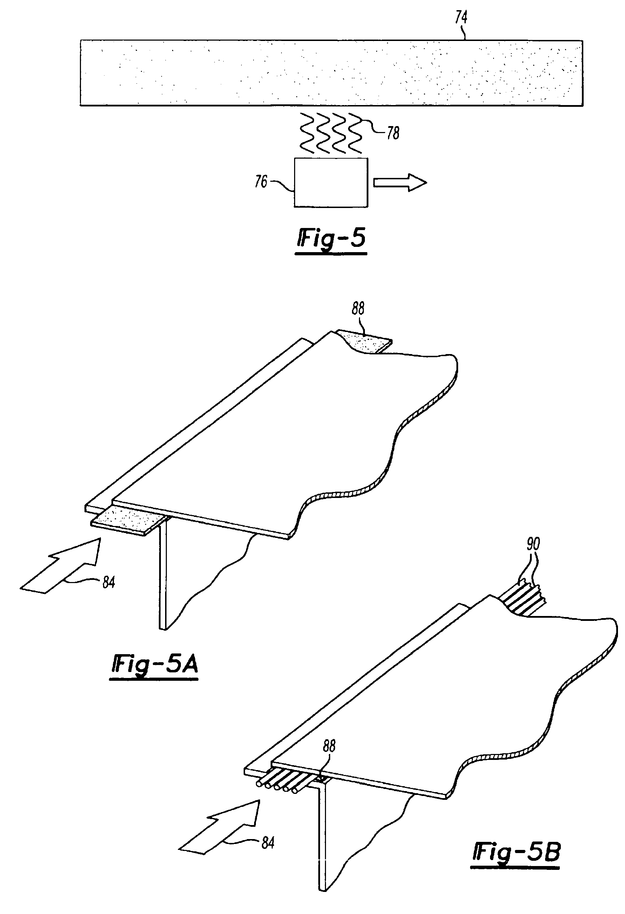

With reference to Fig. 5, it is contemplated that an adhesive material 74 can be placed in contact with one or more surfaces of one or more members and a machine or device 76 can be used to expose the adhesive material 74 to a stimulus 78 that causes curing (e.g., a first cure) of the adhesive material 74. The stimulus 78 can be any of those discussed herein. The stimulus 78 can be, for examples, microwaves that cause heating and, in turn, curing of the adhesive material. The stimulus 78 can be an electromotive force that cause current flow and/or heating (e.g., by induction) and, in turn, curing of the adhesive material. The stimulus 78 can be ultraviolet light that causes curing.

When light, such as UV light, is employed as the stimulus, it is contemplated that, as shown in Fig. 5A, the light 84 can be propagated through the adhesive material 88 by virtue of the chemical reaction (e.g., curing reaction) that the light 84 is causing. As an alternative, however, and as shown in Fig. 5B, pathways 90 for the light 84 can be provided, for example by optical fibers (e.g., filaments).

After curing (i.e., initial or first curing) through the exposure to the stimulus, the adhesive material is typically further cured in a second curing step, although not required unless otherwise stated, to achieve desired properties for the adhesive. The second curing of the adhesive material can be accomplished according to any of the second curing protocols discussed herein or otherwise.

### Intermixing Masses

In another additional or alternative embodiment, it is contemplated that two or more masses of material may be combined to form the adhesive material, initiate the first cure or both. The masses are preferably solid or semi-solid, however, they may possibly liquid (e.g., encapsulated liquid). It is also contemplated that one of the masses can be solid or semi-sold while another of the masses can be liquid. Typically, one of the masses includes the first curing agent while the other of the masses includes a polymeric material curable by the first curing agent. Upon intermixing of the masses, for instance by pressing the two solid masses into a single mass of adhesive material, the first curing agent cures the polymeric material for adhering the adhesive material to one or more surfaces as described herein. Generally, it is contemplated that the masses may be pressed together before contacting of the adhesive material with the surface to which it adheres, however, it is preferred that the masses are located between two or more surfaces of two or more members and compressed between the surfaces to combine and/or intermix the masses.

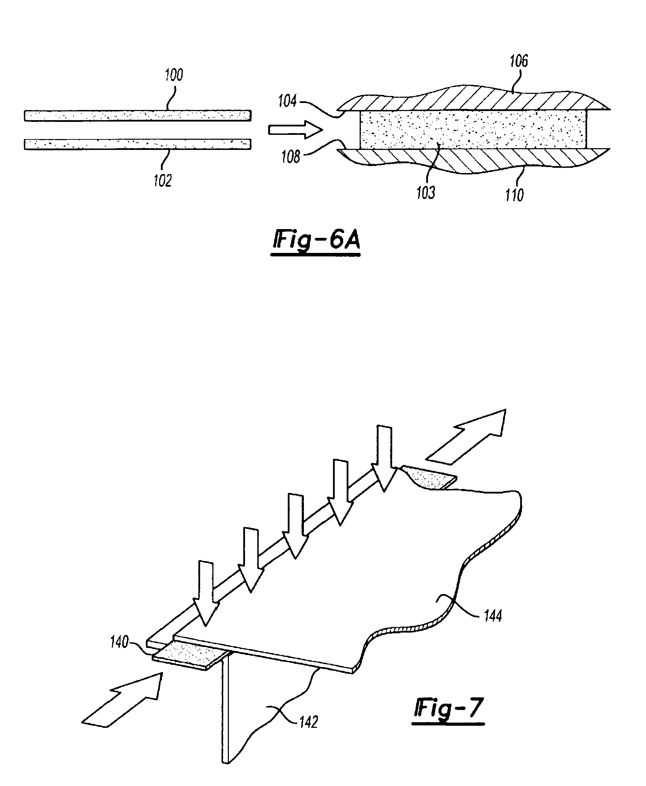

With reference to Fig. 6A, a first mass of substantially solid material having the first curing agent is provided as a first layer 100 and second mass of substantially solid material having a polymeric material (e.g., an epoxy resin) curable by the first curing agent is provided as a second layer 102. The two layers 100, 102 are pressed together to intermix the layers 100, 102 and form an adhesive material 103 that, upon intermixing, undergoes a first cure to adhere the adhesive material to a first surface 104 of a first member 106 and a second surface 108 of a second member 110. As discussed above, the layers 100, 102 can be pressed together to form the adhesive material prior to contacting of the adhesive material with the surfaces 104, 108 or the surfaces 104, 108 can press the layers 100, 102 together such that contacting of the surfaces 104, 108 with the adhesive material 103 is substantially simultaneous with the formation of the adhesive material 103 by intermixing.

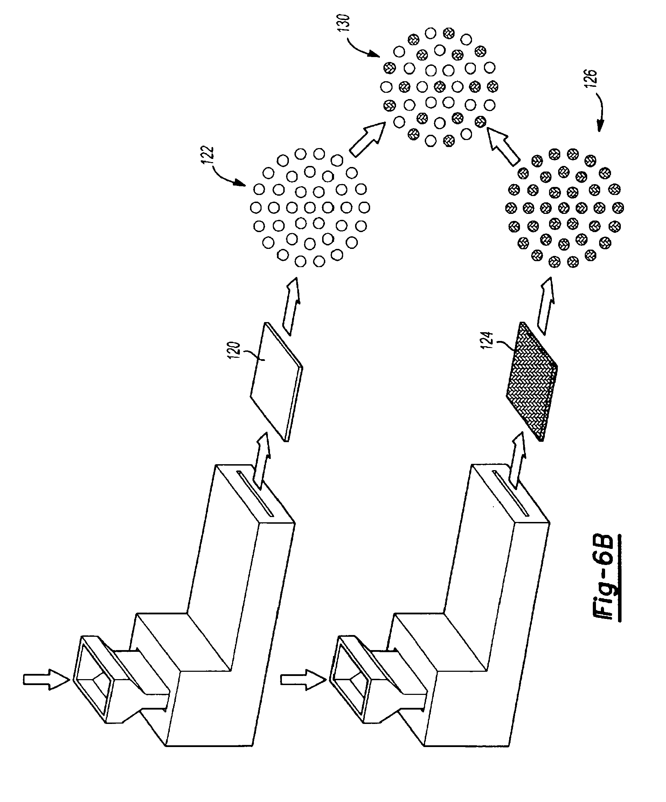

It is also contemplated that the masses to be intermixed and cured may be provided as a multitude (e.g., 100, 1000 or more) of first solid or semi-solid masses and a multitude (e.g., 100, 1000 or more) of second solid or semi-solid masses that are brought into close proximity to each other and then pressed together for intermixing. With reference to Fig. 6B, a first material 120 is extruded and then divided (e.g., pulverized) into a multitude of first masses 122 shown as a first powder having a first curing agent and a second material 124 is extruded and then divided (e.g., pulverized) into a multitude of second masses 126 shown as a second powder having a polymeric material reactive with the first curing agent. The masses 122. 126 are then brought into close proximity to each other to form the adhesive material 130, for example by combining the masses in a liquid or paste material. The liquid or paste material 130 can then be located upon surfaces by spreading, spraying, pouring, dabbing, brushing or the like and can be pressed between surfaces for combining and/or intermixing the first masses 122 and second masses 126 with each other to achieve the first cure.

After curing (i.e., initial or first curing) through intermixing of the masses, the adhesive material is typically further cured in a second curing step, although not required unless otherwise stated, to achieve desired properties for the adhesive. The second curing of the adhesive material can be accomplished according to any of the second curing protocols discussed herein or otherwise.

### Resistance Heating

It is also contemplated that the adhesive material can include one or more ingredients that are heated upon exposure to a stimulus such as an electric potential. Ingredients can include masses (e.g., powder, pellets, flakes chunks or the like) of materials such as metal (e.g., iron phosphide) or graphite (e.g., natural or synthetic graphite) that can be conductive and/or resistive for flow of electrical current.

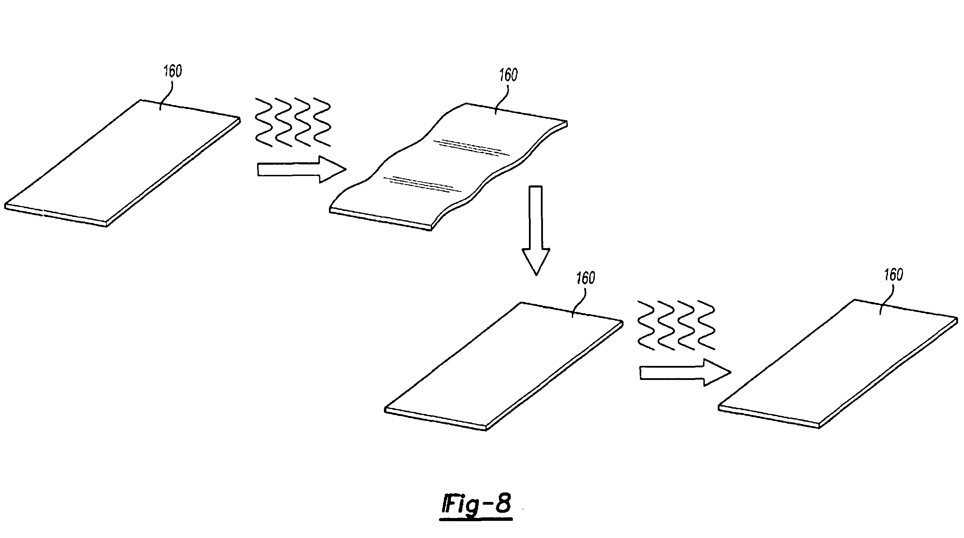

With reference to Fig. 7, an adhesive material 140 with the conductive and/or resistive ingredients can be contacted with one or more surfaces of one or more members 142, 144 (e.g., spars, ribs, skins or the like of an airplane). The adhesive material 140, before, during or after such contacting, can be exposed to (i.e., contacted with) an electrically positive member (e.g., electrode) and an electrically negative member (e.g., electrode) such a current flows through the material 140. The resistive material then heats up causing an initial or first curing of the adhesive material 140.

After initial or first adhesion or curing, the adhesive material then typically undergoes a second curing to achieve the desired properties of the adhesive, although not required unless otherwise stated. The curing of the adhesive material can be accomplished according to any of the second curing protocols discussed herein or otherwise (e.g., by exposure to even greater temperatures than caused the initial adhesion).

### Non-cure Adhesion

It is generally contemplated that the adhesive material can be activated to adhere to one or more surfaces of one or more members without any substantial curing (i.e., such that the adhesive material is less than 10%, more typically less than 2% and even possibly less than 0.1% cured) In such an embodiment the, natural adhesive properties of the material can be employed to achieve a first degree of adhesion to the surfaces and the adhesive material can later be activated to cure and adhere to the surfaces in a manner that achieves desired properties. Such initial adhesion can be accomplished, for example, by including a relatively lower molecular weight solid or liquid epoxy resin in the adhesive material.

As an example and with reference to Fig. 8, an adhesive material 160 that can be initially tacky or substantially non-tacky can be heated to achieve a desired level of tackiness for the material 160 either before during or after contacting of the material with the one or more surfaces to which the material 160 is to adhere. In doing so, the material 160 whets and adheres to the one or more surfaces particularly if the material 160 is allowed to cool after whetting.

After initial or first adhesion through the exposure to the stimulus, the adhesive material is typically then cured to achieve the desired properties of the adhesive, although not required unless otherwise stated. The curing of the adhesive material can be accomplished according to any of the second curing protocols discussed herein or otherwise (e.g., by exposure to even greater temperatures than caused the initial adhesion).

### Advantages of Various Embodiments

Several embodiments of the present invention can provide advantage to industries such as the aerospace industry or automotive industry. For example, the adhesive materials of the present invention can be provided as pre-formed masses (e.g., tapes) as opposed to a paste or pumpable products. Such pre-formed masses can be manually or automatically applied to surfaces as described herein. The pre-formed masses provide a consistent amount of material to surfaces as opposed to manual trowelling or pumping of an adhesive material onto a surface. This consistent application can provide better control over the amount or weight of adhesive material being applied. Moreover, adhesive materials of the present invention and particularly the single cure material exhibits a high degree of open time (i.e., the adhesive material can be removed from the initial temperature at which it is maintained and still be usable for application at least 1 hour, and possibly at least 3 or 4 hours thereafter, although not required unless otherwise stated. The pre-formed masses can also exhibit a more consistent extension of the adhesive material out from between surfaces such that a visual inspection can assure that there are few or no locations that experienced insufficient adhesion.

Unless stated otherwise, dimensions and geometries of the various structures depicted herein are not intended to be restrictive of the invention, and other dimensions or geometries are possible. Plural structural components can be provided by a single integrated structure. Alternatively, a single integrated structure might be divided into separate plural components. In addition, while a feature of the present invention may have been described in the context of only one of the illustrated embodiments, such feature may be combined with one or more other features of other embodiments, for any given application. It will also be appreciated from the above that the fabrication of the unique structures herein and the operation thereof also constitute methods in accordance with the present invention.

The preferred embodiment of the present invention has been disclosed. A person of ordinary skill in the art would realize however, that certain modifications would come within the teachings of this invention. Therefore, the following claims should be studied to determine the true scope and content of the invention.

## Claims

1. A process of adhesion, comprising
providing a first surface and a second surface;
providing an adhesive material, the adhesive material including:
i. epoxy material; and
ii. a curing agent;
maintaining the adhesive material at a first temperature;
contacting the adhesive material with the first surface, the second surface or both; and
exposing the adhesive material to a second temperature within a temperature range for activating the adhesive material to cure and achieve a desired level of adhesion to the first surface and the second surface, the second temperature being greater than the first temperature

2. A process as in claim 1 wherein the first temperature is below 15 °C.

3. A process as in claim 1 or 2 wherein the first surface and the second surface are part of at least one member of an aerospace vehicle, the at least one member being selected from a skin, a rib, a spar, a bracket or part of an elevator, a rudder, a wing movable, a stabilizer, a fin or any combination thereof.

4. A process as in claim 1, 2 or 3 wherein the temperature range includes temperatures of at least 15 °C and below 100 °C

5. A process as in any of claims 1-4 wherein at least a portion of the adhesive material extends out from between the first surface and the second surface during the contacting step or during activation of the adhesive material.

6. A process as in any of claims 1-5 further comprising further curing the adhesive material with a second curing agent for causing a second level of adhesion to the first and second surface.

7. A process as in claim 6 wherein the second curing agent is activated to cure the adhesive material through a mechanism that includes exposure of the second curing agent to elevated temperatures.

8. A process as in any of claims 1-7 wherein the adhesive material exhibits a lap shear strength of at least 15 MPa after cure in the temperature range.

9. A process as in any of claims 1-8 wherein the adhesive material foams upon exposure to the second temperature.

10. A process as in any of claims 1-9 wherein the first temperature is below about 7°C.

11. A process as in any of claims 1-10 wherein the first temperature is below about 0 °C.

12. A process as in claim 1 wherein the adhesive material is cured through exposure to moisture and wherein the adhesive material includes a molecular sieve curing agent.

13. A process as in claim 12 wherein the adhesive material includes cellulosic fiber, scrim or both for assisting in transporting the moisture into the adhesive material.

14. A process as in any of claims 1-13 wherein the adhesive material further includes blowing agent.
